# EUROPÄISCHE PATENTSCHRIFT

(11) **EP 0 253 998 B1**
(45) Veröffentlichungstag und Bekanntmachung des Hinweises auf die Patenterteilung: **27.01.1993**
(21) Anmeldenummer: 87108000.8
(22) Anmeldetag: 03.06.1987
(51) Int. Cl.: A01B 29/06, A01B 49/06

(54) **Vorrichtung zur landwirtschaftlichen Bodenbearbeitung**
Agricultural ground conditioning device
Machine agricole de préparation du sol

(30) Priorität: 22.07.1986 DE 3624784
(43) Veröffentlichungstag der Anmeldung: 27.01.1988
(60) Teilanmeldung: 92102544.1
(73) Patentinhaber: KUHN S.A., F-67706 Saverne Cedex (FR)
(72) Erfinder: Kemmner, Hartmut, D-7411 Unterensingen (DE)
(74) Vertreter: Kratzsch, Volkhard, Dipl.-Ing.

(56) Entgegenhaltungen:
- DE-A- 2 818 718
- DE-A- 2 912 392
- DE-B- 1 161 067
- DE-U- 8 512 299
- FR-A- 1 014 132
- FR-A- 1 234 214
- FR-A- 2 423 118
- FR-A- 2 488 768
- GB-A- 667 904
- GB-A- 2 117 212
- US-A- 2 261 893
- US-A- 3 392 791
- US-A- 4 509 438

## Beschreibung

Die Erfindung bezieht sich auf eine Vorrichtung zur landwirtschaftlichen Bodenbearbeitung der im Oberbegriff des Anspruchs 1 genannten Art.

Vorrichtungen mit einem Krumenpacker werden insbesondere zur Abstützung und Höhenführung von Bodenbearbeitungsgeräten, z.B. Eggen, Kreiseleggen, Grubbern, etc. verwendet, welche mittels einer Zugmaschine über den Acker gezogen werden. Dabei wird angestrebt, dass der Krumenpacker auch zum Zerkrümeln von Schollen und zum Verfestigen der Ackeroberfläche mit beiträgt. Vorrichtungen dieser Art bringen jedoch Probleme mit sich. Der Krumenpacker kann sich bei der Bearbeitung mit Erdklumpen, Steinen, Stroh oder dergl. vollsetzen und neigt damit zum Verstopfen. Je nach Feuchtigkeit und Art des Bodens drückt sich der Boden durch die Längsstäbe des Krumenpackers hindurch und sammelt sich dann im Inneren dieses. Ebenso sammeln sich darin Steine, Stroh und dergleichen Unrat. Insbesondere bei feuchtem Wetter mit feuchtem, klebrigen Boden ist der Krumenpacker häufig verstopft, weswegen bei solchen Witterungen allein aus diesen Gründen Arbeiten auf dem Feld meist nicht möglich sind. Diese Schwierigkeiten mit Krumenpackern sind hinlänglich bekannt. Man hat versucht (DE-U-78 12 988) dem damit zu begegnen, dass man im Inneren des walzenförmigen Körpers ein oder mehrere in unmittelbarer Nähe und in Richtung der Längsstäbe sich erstreckende Druckstäbe vorsieht, die entweder als im Inneren dieses Körpers frei rollende Polterstäbe oder statt dessen als mittels Haltearmen an der undrehbaren Lagerachse des walzenförmigen Körpers starr befestigte Stäbe ausgebildet sind. Die Druckstäbe befinden sich dabei im rückwärtigen Bereich des walzenförmigen Körpers, und zwar in dessen hinteren und dabei unteren Quadranten. Es ist deshalb zu vermuten, dass derartige Druckstäbe ein Eindringen von Erdklumpen, Steinen, Stroh, Pflanzenrückständen oder dergl. in das Innere des walzenförmigen Körpers nicht verhindern können. Haben diese Materialien das Innere des walzenförmigen Körpers erreicht, so sind sie daraus nicht mehr zu entfernen. Die Verstopfung beginnt und nimmt ihren Fortgang. Im Betrieb bildet sich in Arbeitsrichtung vor dem Krumenpacker ein Erdreichhaufen, der vom Krumenpacker vor diesem hergeschoben wird. Gerade dort können Schollen, Erdklumpen, Steine, Stroh, Pflanzenrückstände oder dergl. aber ungehindert durch die Zwischenraumbereiche zwischen den Längsstäben in das Innere des walzenförmigen Körpers eindringen. Auch im Inneren des walzenförmigen Körpers angeordnete, starre Rechen sind ebensowenig geeignet, der Verstopfungsgefahr des Krumenpackers entgegenzuwirken.

Eine Vorrichtung gemäss der im Oberbegriff des Anspruchs 1 genannten Art ist aus der US-A-3,392,791 bekannt. Diese bekannte Vorrichtung weist einen Rahmen auf, an welchem radartige Krumenpacker angelenkt sind. Jeder Krumenpacker weist einen walzenförmigen Körper in Form eines Rades auf, der aus einer Scheibe und einem zylindrischen Mantel besteht. Der zylindrische Mantel ist durch horizontale Längsstäbe und ringförmige Querstreben gebildet. Der zylindrische Mantel des walzenförmigen Körpers weist deshalb viele durch die Längsstäbe und die ringförmige Querstreben gebildete Öffnungen auf. In seinem Mittelbereich ist die Scheibe des walzenförmigen Körpers mit einer vorstehenden Nabe versehen, mittels welcher der walzenförmige Körper auf einer horizontalen, zur Fahrtrichtung rechtwinkelig angeordneten ersten Achse drehbar gelagert ist. Diese Achse ist starr am Ende eines Schwenkarmes befestigt, welcher, an seinem anderen Ende, mittels einer zur ersten Achse parallelen zweiten Achse schwenkbar am Rahmen angelenkt ist. Zwischen dem Schwenkarm und dem Rahmen ist weiter ein Druckarm vorgesehen, der eine Druckfeder aufweist, die den Schwenkarm und den walzenförmige Körper während der Arbeit gegen den Boden drückt. Am anderen Ende der ersten Achse ist ein radialer Arm drehfest, jedoch um die Längsachse der ersten Achse verstellbar, angeordnet. Am gegenüberliegende Ende des radialen Armes ist eine zur ersten Achse parallele dritte Achse ebenfalls drehfest verbunden. Die drehfeste Verbindung des radialen Armes einerseits mit der ersten Achse und andererseits mit der dritten Achse wird mit je einer Klemmvorrichtung durchgeführt. Auf der dritten Achse ist eine Zinkenwalze drehbar gelagert. Diese Zinkenwalze besteht aus einer Nabe und Zinken, die von der Nabe aus radial vorstehen. Die Lage der Zinkenwalze und die Länge der Zinken sind derart bestimmt, dass die Zinken, beim Umlauf des walzenförmigen Körpers, jeweils durch die Öffnungen des durch die Längsstäbe und die ringförmige Querstreben gebildeten Mantels des walzenförmigen Körpers hindurchgreifen. Während der Arbeit, wenn der walzenförmige Körper sich auf dem Boden abrollt, stechen die durch die Öffnungen des äusseren Mantels des walzenförmigen Körpers hindurchgreifende Zinken der Zinkenwalze in den Boden. Durch die kombinierte Aktion der Zinken der Zinkenwalze und des Mantels des walzenförmigen Körpers wird der Boden ganz gekrümelt. Dadurch, dass die Zinken jeweils zuerst in die Öffnungen des Mantels des walzenförmigen Körpers eingreifen und sich dann wieder herausziehen, ist die Vorrichtung selbstreinigend. Will man die Eingriffstiefe der Zinken in den Boden verkleinern, wird die Klammvorrichtung, mittels welcher der radiale Arm mit der ersten Achse drehfest verbunden ist, geöffnet und der radiale Arm samt Zinkenwalze entweder vorwärts oder rückwärts um die Längsachse der ersten Achse geschwenkt.

Während der Arbeit, wird die Zinkenwalze dieser bekannten Vorrichtung mit einem hohen Druck belastet, was zu den gefürchteten Beschädigungen führen kann. Da ferner die Zinken der Zinkenwalze von der Nabe aus radial vorstehen, kann es zu Verstopfungsprobleme kommen wenn der Boden mit Pflanzen und/oder Ernterückstande bedeckt ist, wie das heutzutage in der modernen Bodenbearbeitung immer wieder vorkommt.

Es ist Aufgabe der Erfindung, die vorstehend erwähnten Probleme des gattungsbildenden Standes der Technik (US-A-3,392,791) bestmöglichst zu beseitigen.

Diese Aufgabe ist erfindungsgemäss dadurch gelöst worden, dass die Zinken der Zinkenwalze gegen die Umlaufrichtung der Zinkenwalze gekröpft, gebogen oder abgeknickt sind.

Mit der erfindungsgemässen Vorrichtung werden die von Eggen, Kreiseleggen, Grubbern oder dergl. hinterlassenen Schollen von der umlaufenden Zinkenwalze, die in dem Bereich des walzenförmigen Körpers arbeitet, in dem sich die grösste Ansammlung von Schollen, Erdklumpen oder dergl. befindet, die ja im Betrieb in diesem Bereich vor dem walzenförmigen Körper hergeschoben werden, abgehalten bzw. zertrümmert oder unterhalb der Oberfläche gedrückt. Es wird mithin die Ackeroberfläche von den Zinken der Walze derart bearbeitet, dass diese feinkrümelig wird. Da die Zinken ausserdem ständig zwischen die Zwischenraumbereiche zwischen den Längsstäben greifen, wird ein etwaiger am Krumenpacker anhaftender Boden aus diesem sofort herausgedrückt, so dass dieser gar nicht erst in das Innere des walzenförmigen Körpers hineingelangen kann. Dies macht sich insbesondere bei schwerem feuchten Boden bemerkbar, da selbst dann ein Hängenbleiben von Erdreich am walzenförmigen Körper durch die ständige Umlaufarbeit der Zinkenwalze ausgeschlossen ist. Der Gefahr etwaiger Verstopfung des walzenförmigen Körpers ist damit wirksam begegnet. Da die Zinken der Zinkenwalze gegen die Umlaufrichtung der Walze gekröpft, gebogen oder abgeknickt sind, wird beim jeweiligen Eingreifen der umlaufenden Zinken in den Boden einer etwaigen Drucküberlastung der Zinken und der Walze entgegengewirkt. In der Tat, beim Eindringen in den Boden werden die Zinken gegen den zugeordneten Längsstab des walzenförmigen Körpers gedrückt und "hängen" sich dann an diesem Längsstab an, sodass sich die Walze aufgrund der Druckbelastung kaum durchbiegen kann. Durch die gekröpfte, gebogene oder abgeknickte Form der Zinken, wird auch verhindert, dass die Zinken, beim Eindringen in den Boden, in die darauf liegenden Pflanzen und/oder Ernterückstände einstechen, sodass die gefürchteten Verstopfungen nicht auftreten können.

In den Unteransprüchen sind vorteilhafte Weiterentwickelungen des in dem Anspruch 1 gekennzeichneten Gegenstandes enthalten. Daraus ist ersichtlich, dass insbesondere die Halterung und die Lagerung der Zinkenwalze wenig Aufwand, Gewicht und Kosten bedingen.

Eine zusätzliche vorteilhafte Ausgestaltung ergibt sich aus Unteranspruch 24 und den darauf folgenden Unteransprüchen 25 bis 29. Dadurch ist mit einfachen Mitteln zusätzlich eine Aussenreinigung des walzenförmigen Körpers erreichbar. Somit sind selbst massive Ernterückstände oder nasser, klebriger Boden kein Hindernis mehr.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene stirnseitige Ansicht einer erfindungsgemäßen Vorrichtung zur landwirtschaftlichen Bodenbearbeitung,
- Fig. 2: einen schematischen axialen Längsschnitt von Teilen der Vorrichtung in Fig. 1,
- Fig. 3: einen schematischen Längsschnitt etwa entsprechend demjenigen in Fig. 2 eines Teiles einer Vorrichtung gemäß einem zweiten, abgewandelten Ausführungsbeispiel,
- Fig. 4: einen schematischen, axialen Längsschnitt etwa entsprechend demjenigen in Fig. 3 eines dritten Ausführungsbeispieles, und
- Fig. 5: eine schematische, teilweise geschnittene Seitenansicht einer Verstellspindel mit Überlastsicherung der Vorrichtung in Fig. 1.

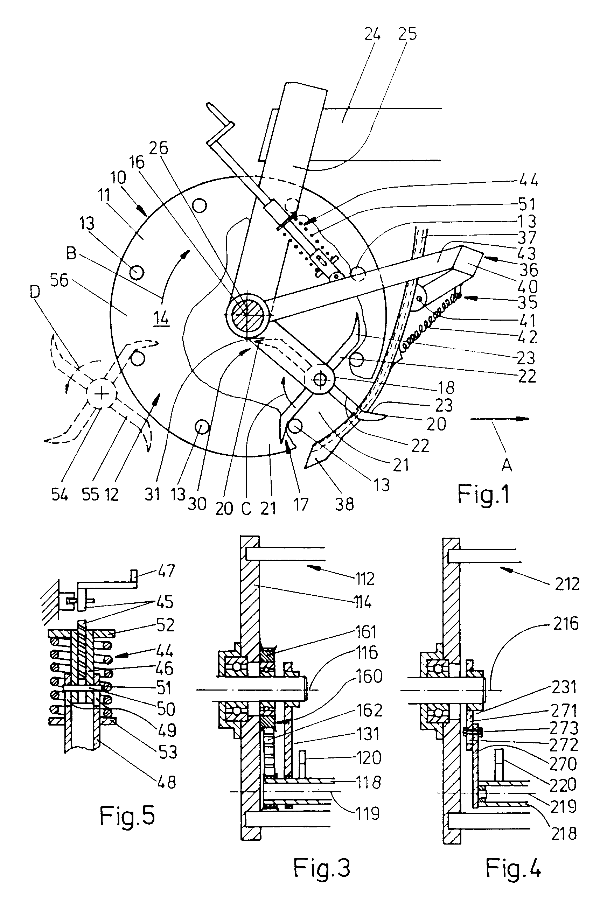

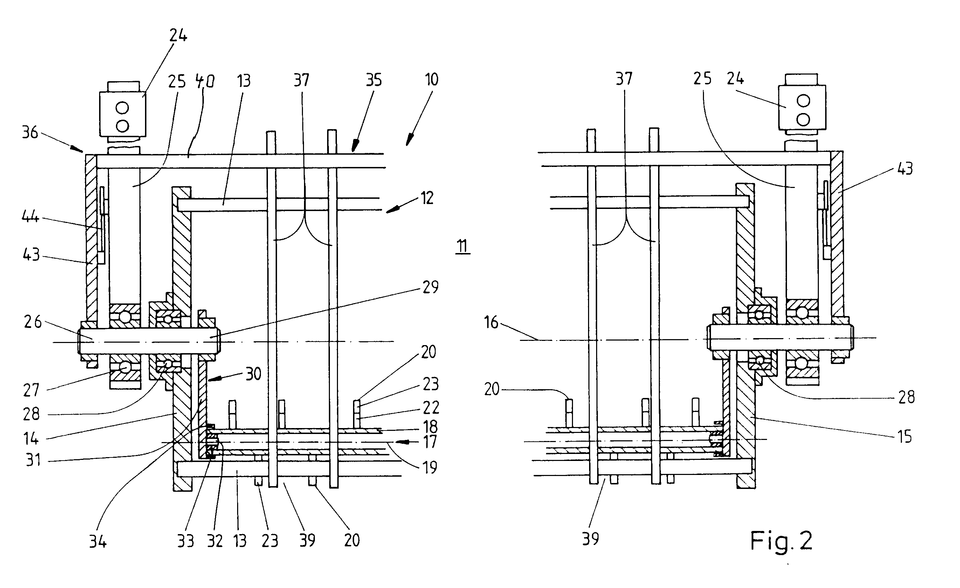

In Fig. 1 und 2 ist eine Vorrichtung 10 zur landwirtschaftlichen Bodenbearbeitung gezeigt, die einen Krumenpacker 11 aufweist. Diese werden üblicherweise hinter einem von einem Traktor gezogenen Bodenbearbeitungsgerät geführt, an dem sie z.B. zur Halterung und Höhenführung seines Rahmens gehalten sind. Generell sind Krumenpacker hinlänglich bekannt. Sie bedürfen daher keiner weiteren umfassenden Erörterung.

Der Krumenpacker 11 weist einen etwa walzenförmigen Körper 12 auf, dessen Mantelfläche durch etwa achsparallele Längsstäbe 13 gebildet ist, die in Umfangsrichtung in z.B. gleich großen Abständen aufeinander folgen. An beiden Enden weist der walzenförmige Körper 12 stirnseitige Abschlußscheiben 14, 15 auf, die bis zur Längsmittelachse 16 entweder im wesentlichen aus Vollmaterial bestehen oder aus Ringen gebildet sind, die eine zentrale, über Speichen gehaltene Nabe aufweisen.

Derartige walzenförmige Körper 12 haben meist relativ große Abmessungen, z.B. in der Größenordnung von 4 m. Entlang der Längsmittelachse 16 folgen in bestimmten Abständen Ringscheiben, die der Radialabstützung der Längsstäbe 13 und der Verfestigung des Körpers 12 dienen und der besseren Übersicht wegen in Fig. 1 und 2 nicht besonders gezeigt sind.

Der Krumenpacker 11 weist ferner zumindest eine allgemein mit 17 bezeichnete Erdbehandlungseinrichtung auf, die mit dem walzenförmigen Körper 12 zusammenarbeitet und einem Längsstab 13 benachbart ist.

Die Erdbehandlungseinrichtung 17 weist mindestens eine Walze 18 auf, die im Inneren des walzenförmigen Körpers 12 angeordnet ist. Die Walze 18 besteht, wie gezeigt, z.B. aus einem Rohr oder statt dessen aus Vollmaterial. Als Material dafür kommen Holz, Metall oder auch Kunststoff in Betracht, auch diese Materialien, beschichtet mit Gummi oder Kunststoff. Die Walze 18 ist innerhalb des Körpers 12 um eine zu dessen Längsmittelachse 16 zumindest im wesentlichen parallel verlaufende Achse 19 drehbar gelagert. Sie weist entlang der Achse 19 in z.B. gleich großen Abständen aufeinanderfolgende, von der Walze 18 aus vorstehen de Zinken 20 auf,. Der Durchmesser der Walze 18 ist im Grunde beliebig, solange er nur kleiner als der von den Längsstäben 13 umschriebene Innendurchmesser ist. Die Relativlage der Walze 18 in bezug auf die Längsmittelachse 16 und das Radialmaß der einzelnen Zinken 20 sind aber so gewählt, daß die Zinken 20 beim Umlauf der Walze 18 jeweils durch die Zwischenraumbereiche 21 zwischen zwei beim Umlauf des Körpers 12 aufeinanderfolgenden Längsstäben 13 hindurchgreifen können. Dies ist für zwei Zinken 20 bei der Stellung in Fig. 1 zu sehen. Wie ersichtlich, ist die Walze 18 dabei, betrachtet in Arbeitsrichtung gemäß Pfeil A, im der Längsmittelachse 16 vorgelagerten vorderen und dabei zugleich unteren Quadranten des walzenförmigen Körpers 12 und dabei etwa im Bereich der Winkelhalbierenden dieses Quadranten, angeordnet.

Bei der Arbeitsrichtung gemäß Pfeil A, in der die Vorrichtung 10 mittels des nicht gezeigten Traktors vorwärtsgeschleppt wird, läuft der walzenförmige Körper 12 im Uhrzeigersinn gemäß Pfeil B um die Längsmittelachse 16 um. Die Walze 18 läuft damit gleichsinnig um, d.h. ebenfalls im Uhrzeigersinn gemäß Pfeil C.

Die Walze 18 ist zwangsangetrieben. Ihr Antrieb erfolgt vom walzenförmigen Körper 12 her. Beim gezeigten Ausführungsbeispiel bestehen die Mitnehmer 20 jeweils aus radialon Zinken, die aus Metall, Holz oder Kunststoff gebildet sind oder aus diesem Material, das außen mit Gummi, Kunststoff oder dergl. beschichtet ist. Einige der Zinken 20 können aus elastisch federndem und nachgiebigem Material gebildet und/oder federnd an der Walze 18 gehalten sein.

Wie man aus Fig.1 und Fig. 2 erschließt, sind beim gezeigten Ausfünrungsbeispiel in Längsrichtung der Walze 18 gesehen jeweils einzelne radiale Zinken 20 vorhanden, die längs der Walze 18 in vorzugsweise gleich großen Abständen aufeinander folgen. An jeder Stelle sitzt an der Walze 18 dabei also lediglich ein Zinken 20. Diese Zinken 20 sind, in Umfangsrichtung der Walze 18 betrachtet, gegeneinander versetzt, wodurch sich die in Fig. 1 in der Stirnansicht sternförmige Konfiguration ergibt. Bei dieser Anordnung befinden sich längs der Walze 18 einige der Zinken 20 immer in Zwischenraumbereichen 21 zwischen zwei Längsstäben 13 des walzenförmigen Körpers 12.

Bei einem anderen, nicht gezeigten Ausführungsbeispiel sind statt dessen je Axialbereich an der Walze 18 gleich mehrere derartige Zinken 20 angeordnet, die sich dann in einer gemeinsamen Radialebene erstrecken und in diesem Axialbereich in Umfangsrichtung z.B. in gleich großen Winkelabständen aufeinanderfolgen. Diese Zinken können dann auch zu einem Zinkenrad je Axialbereich zusammengefaßt sein.

Zumindest einige der Zinken 20, beim gezeigten ersten Ausführungsbeispiel alle Zinken 20, der Walze 18 sind hier als Getriebezähne ausgebildet und/oder wirksam, wobei diese radial über den von den Längsstäben 13 umschriebenen Umfangskreis des walzenförmigen Körpers 12 hinausreichen derart, daß bei der Umlaufdrehbewegung des Körpers 12 im Uhrzeigersinn gemäß Pfeil B die Walze 18 nach Art einer Triebstockverzahnung von den Längsstäben 13 ebenfalls im Uhrzeigersinn gemäß Pfeil C zwangsangetrieben wird. Dabei läuft die Walze 18 mit vom Zähnezahlverhältnis bestimmter, z.B. mehrfach höherer Drehzahl als der walzenförmige Körper 12 um. Der Umlauf geschieht dadurch, daß immer zumindest ein Zinken 20 - meist sind es längs der Walze 18 mehrere Zinken 20 - in Antriebsrichtung gemäß Pfeil B von einem Längsstab 13 bei dessen Umlaufbewegung vorwärtsgeschoben wird, wobei sich dieser Zinken 20 aus dem Zwischenraumbereich 21 herausbewegt, während bei der Umlaufbewegung der Walze 18 zumindest ein anderer Zinken 20, meist sind es ebenfalls mehrere Zinken 20, in den nächstfolgenden Zwischenraumbereich 21 hineinbewegt werden, und zwar bevor bei der Umlaufbewegung des Körpers 12 der nächste Längsstab 13 in den Bereich der Rückseite des Zinkens 20 gelangt.

Die Zinken 20 sind gegen ihre Umlaufrichtung gemäß Pfeil C gebogen, abgeknickt oder sonstwie gekröpft. Beim gezeigten Ausführungsbeispiel weist jeder Zinken 20 einen von der Walze 18 ausgehenden Radialabschnitt 22 auf, der in Radialrichtung abstrebt, und ferner einen an den Radialabschnitt anschließenden Endabschnitt 23 . Der Endabschnitt 23 schließt an den Radialabschnitt 22 dort an, wo etwa der von den Längsstäben 13 umschriebene Umfangskreis verläuft. Dabei ist der Endabschnitt 23 nicht etwa in radialer Verlängerung des Radialabschnittes 22 ausgerichtet, sondern vielmehr diesem gegenüber gegen die Umlaufrichtung gemäß Pfeil C unter einem stumpfen Winkel abgebogen. Das Radialmaß der Zinken 20 ist so bemessen, daß diese mit ihrem freien Ende, das hier als Spitze am Ende des Endabschnittes 23 ausgebildet ist, über den äußeren Hüllkreis des walzenförmigen Körpers 12 hinaus vorstehen, wie Fig. 1 zeigt.

Für die Lagerung des walzenförmigen Körpers 12 sind an einer Halterung 24 des Krumenpackers 11 beidseitig abstrebende Haltearme 25 vorgesehen, die jeweils einen Achsstummel 26 tragen, der im zugeordneten Haltearm 25 mittels eines Wälzlagers 27 oder eines nicht gezeigten Gleitlagers drehbar gelagert ist. Auf dem jeweils zugewandten Teil des Achsstummels 26 ist der walzenförmige Körper 12 mittels eines Wälzlagers 28 oder eines nicht gezeigten Gleitlagers frei drehbar gelagert, das an oder in der Abschlußscheibe 14, 15 gehalten und nach außen hin gegen Eindringen von Schmutz abgedeckt ist. Die Achsstummel 26 ragen mit ihrem Endabsatz 29 axial in das Innere des walzenförmigen Körpers 12 hinein. An diesem Endabsatz 29 ist drehfest eine allgemein mit 30 bezeichnete Tragvorrichtung gehalten, an der die Walze 18 frei drehbar gelagert ist. Die Tragvorrichtung 30 ist der jeweiligen stirnseitigen Abschlußscheibe 14, 15 eng benachbart unter Belassung eines nur sehr schmalen Spaltes, um ein etwaiges Eindringen von Krumen, insbesondere von Steinen, zu verhindern, die sonst ein Klemmen beider Teile verursachen könnten. Die Tragvorrichtung 30 besteht jeweils aus einem radial verlaufenden Tragteil 31. Der Tragteil 31 hat z.B. die Form einer Strebe. Er kann in nicht weiter gezeigter Weise abgefedert sein oder er ist bei einem anderen Ausführungsbeispiel gleich als Blattfeder ausgebildet, die selbst ein federndes Verhalten hat. Zur Lagerung der Walze 18 sitzt drehfest an jedem Tragteil 31 ein Lagerzapfen 32, auf dem die Walze 18 z.B. über ein dazwischengefügtes Gleitlager 33 in Form einer Hülse aus Holz oder Kunststoff drehbar gelagert ist. Der Tragteil 31 sitzt z.B. mit einer Buchse auf dem Endabsatz 29, mit dem er durch Versplinten oder dergl. drehfest verbunden ist.

Bei einem anderen, nicht gezeigten Ausführungsbeispiel sitzen die Lagerzapfen 32 direkt an der Walze 18 und sind am zugeordneten Tragteil 31 drehbar gelagert.

An jedem Ende der Walze 18 ist ein Schutzring 34 vorgesehen, der die dortige endseitige Lagerstelle der Walze 18 umgibt und nach außen hin abdeckt und schützt, so daß ein etwaiges Eindringen von Schmutz von außen her in die Lagerung der Walze 18 verhindert ist.

Nicht weiter gezeigt ist, daß die Achsstummel 26 federnd an den Haltearmen 25 gehalten sein können, wozu z.B. die Haltearme 25 ihrerseits federnd an der Halterung 24 angebracht sind.

Wird das nicht gezeigte Gerät zur Bodenbearbeitung vom Traktor in Arbeitsrichtung gemäß Pfeil A geschleppt mit über die Halterung 24 daran gehaltener Vorrichtung 10, so rollt der walzenförmige Körper 12 im Uhrzeigersinn gemäß Pfeil B auf dem vom voranlaufenden Bearbeitungsgerät behandelten Boden ab. Dabei schiebt der Körper 12 im Bereich des vorderen unteren Quadranten eine Anhäufung von Bodenmaterial vor sich her. Beim Umlauf des walzenförmigen Körpers 12 werden über dessen Längsstäbe 13 die Zinken 20 der Walze 18 beaufschlagt, die dadurch in gleicher Richtung gemäß Pfeil C vom walzenförmigen Körper 12 angetrieben wird und umläuft. Dadurch, daß die Zinken 20 entgegen der Drenrichtung gemäß Pfeil C gekröpft sind oder nach hinten gebogen sind, wird beim jeweiligen Eingreifen der umlaufenden Zinken 20 in den Boden einer etwaigen Drucküberlastung der Zinken 20 und der Walze 18 entgegengewirkt; denn dann werden die Zinken 20 umso stärker gegen ihre Umlaufrichtung gebogen, womit einem etwaigen Verklemmen zwischen den Längsstäben 13 und etwaiger Zerstörung vorgebeugt ist. Somit können auch etwaige Hindernisse, wie Steine, Wurzeln, Pflanzenrückstände oder dergl. einen störungsfreien Betrieb nicht behindern. Die Walze 18 mit den Zinken 20 läuft im Vernältnis zum walzenförmigen Körper 12 wesentlich schneller um. Dabei greifen die Zinken 20 durch die Zwischenraumbereiche 21 hindurch und in den Boden ein. Die von den der Vorrichtung 10 voranlaufenden Geräten, z.B. Eggen, Kreiseleggen, Grubbern etc. hinterlassenen Schollen werden durch die Walze 18 mit den Zinken 20 abgehalten und/oder zertrümmert und/oder unterhalb der Oberfläche gedrückt. Dadurch ergibt sich eine feinkrümelige Oberfläche des Bodens. Die Walze 18 mit den Zinken 20 bewirkt also eine Bodenbearbeitung dergestalt, daß größere Bodenteile relativ feinkrümelig zertrümmert und zerkrümelt werden und schon dadurch nicht den Krumenpacker 11 beaufschlagen und dessen Funktionsfähigkeit beeinträchtigen können. Ein weiterer Vorteil ergibt sich vor allem bei feuchtem Wetter, bei dem sonst die Gefahr einer Verstopfung des Krumenpackers 11 noch wesentlich größer ist. Denn je nach Feuchtigkeit und Art des Bodens drückt sich der Boden durch die Längsstäbe 13 des walzenförmigen Körpers 12 sonst hindurch und kann sich im Inneren des Körpers 12 sammeln, Brücken zwischen den Längsstäben 13 bilden oder in sonstiger Weise den Krumenpacker verstopfen. Natürlich könnten sich sonst auch im Inneren des Körpers 12 Steine, Stroh, Pflanzenrückstände oder dergl. sonstige Materialien ansammeln, die bei herkömmlichen Krumenpackern diesen vor allem bei feuchtem Wetter relativ schnell verstopfen und unbrauchbar machen. Dank der erfindungsgemäßen Erdbehandlungseinrichtung 17 ist dies vermieden; denn aufgrund der ständig zwangsangetriebenen, umlaufenden Walze 18 mit Zinken 20, die durch die Zwischenraumbereiche 21 zwischen den Längsstäben 13 hindurchgreifen, wird ständig etwaiger, am walzenförmigen Körper 12 anhaftender Boden sofort herausgedrückt, und dies gerade dort, wo dieser am stärksten anfällt, nämlich im vorderen, unteren Quadranten des walzenförmigen Körpers 12. Es wird also verhindert, daß Erdklumpen, Steine, Stroh und dergl. Unrat überhaupt zwischen die Zwischenraumbereiche 21 zwischen den Längsstäben 13 in den walzenförmigen Körper 12 hineingelangen kann. Bevor dies geschehen könnte, wird der am Körper 12 etwa anhaftende Boden bereits durch die Zinken 20 der Walze 18 herausgedrückt und dazu auch noch zertrümmert und feinkrümelig gemacht. Dadurch ist es möglich, auch bei feuchtem Wetter mit Bodenbearbeitungsgeräten noch zu arbeiten und etwaige verfügbare Zeit dann zu nutzen, ohne daß Störungen beim Krumenpacker 11 und insbesondere Arbeitsunterbrechungen zwecks Reinigung dieses sowie sonstige Behinderungen durch sonst gegebene Verstopfungsgefahr des Krumenpackers 11 zu befürchten sind.

Die von den beidseitigen Achsstummeln 26 getragene Walze 18 mit Zinken 20 ist um die Längsmittelachse 16 relativ zu den die Achsstummel 26 drehbar tragenden Haltearmen 25 verstellbar. Hierzu dient eine Verstelleinrichtung 44 zwischen einem Haltearm 25 einerseits und einer Haltestrebe 43 andererseits, die drehfest mit dem zugeordneten Achsstummel 26 verbunden ist. Die Verstelleinrichtung 44 ist im Detail in Fig. 5 gezeigt. Sie weist im einzelnen eine Verstellspindel auf, die in herkömmlicher Weise aus einer Gewindespindel 45 und einer mit Innengewinde versehenen und die Gewindespindel 45 aufnehmenden Spindelhülse 46 besteht. Die Gewindespindel 45 ist endseitig mit einer Kurbel 47 versehen und drehbar, jedoch axial unverschiebbar, z.B. am Haltearm 25 gelagert. Die Spindelhülse 46 taucht in ein Verstellrohr 48 ein, das ein achsparalleles Langloch 49 aufweist. Die Spindelhülse 46 ist mit einem querverlaufenden Stift 50 versehen, der in das Langloch 49 eingreift. Eine Feder 51 greift an der Verstellspindel der Verstelleinrichtung 44 an. Sie ist zwischen der Spindelhülse 46 einerseits und dem Verstellrohr 48 andererseits wirksam. Beide tragen Abstützglieder 52 bzw. 53 in Form von Querstiften, Tellern oder dergl., an denen sich die zugewandten Enden der Feder 51 abstützen.

Bei einem anderen, nicht gezeigten Ausführungsbeispiel besteht die Verstelleinrichtung aus Lochschienen, die jeweils an dem zugeordneten Haltearm 25 befestigt sind. Jede Lochschiene erstreckt sich vom zugeordneten Haltearm 25 in Richtung zur zugeordneten Haltestrebe 43, die z.B. Stifte oder dergl. Verriegelungsteile trägt, die in das je nach Schwenkstellung gewünschte Loch der Lochschiene eingreifen.

Eine weitere wesentliche Besonderheit der Vorrichtung 10 ist allein in Fig. 1 gestrichelt angedeutet und besteht in einer in Arbeitsrichtung gemäß Pfeil A hinter dem walzenförmigen Körper 12 und außerhalb dieses drehbar gehaltenen Zustreichwalze 54. Diese ist vom walzenförmigen Körper 12 zwangsangetrieben. Die Zustreichwalze 54 weist radial vorstehende Zinken 55 ähnlich den Zinken 20 auf. Diese sind, wie bei der Walze 18, in Längsrichtung der Zustreichwalze 54 z.B. in gleichmäßigen Abständen aufeinanderfolgend angeordnet. Alle Zinken 55 oder zumindest einige davon sind hinsichtlich ihrer Radialerstreckung derart bemessen, daß sie von außen her in die Zwischenraumbereiche 56 zwischen zwei aufeinanderfolgenden Längsstäben 13 des walzenförmigen Körpers 12 eingreifen, beim gezeigten Ausführungsbeispiel sogar durch diese hindurchgreifen können. Zumindest einige der Zinken 55 der Zustreichwalze 54 sind, wie bei der Walze 18, als Getriebezähne ausgebildet, wobei sie radial in den von den Längsstreben 13 umschriebenen Umfangskreis des walzenförmigen Körpers 12 von außen hineinreichen derart, daß bei der Umlaufbewegung des walzenförmigen Körpers 12 die Zustreichwalze 54 nach Art einer Triebstockverzahnung von den Längsstäben 13 des Körpers 12 angetrieben ist. Dabei läuft die Zustreichwalze 54 gemäß Pfeil D im Gegenuhrzeigersinn und somit gegensinnig zur Drehrichtung des Körpers 12 um. Zumindest die Zinken 55, die als Getriebezähne fungieren, sind in sich starr und/oder starr an der Zustreichwalze 54 gehalten, während alle übrigen Zinken 55 in sich federnd und/oder federnd an der Zustreichwalze 54 gehalten sein können. Die besondere Halterung der Zustreichwalze 54, mit der diese drehbar am gesamten Gestell gelagert ist, ist nicht besonders hervorgehoben. Bei dieser Halterung kann eine federnde Aufnahme der gesamten Zustreichwalze 54 erfolgen. Die Zustreichwalze 54 kann auch lose hinter dem walzenförmigen Körper 12 hängen, z.B. durch Ketten, Seile oder dergl., wenn nur der Zahneingriff nach Art einer Triebstockverzahnung für den Antrieb der Zustreichwalze 54 gewährleistet ist. Mittels der Zustreichwalze 54 wird eine zusätzliche Außenreinigung des Krumenpackers 11 bewirkt. Dabei sind auch massive Ernterückstände oder nasser, klebriger Boden kein Hindernis. Es empfiehlt sich, die Zinken 55, die nicht für den Drehantrieb der Zustreichwalze 54 sorgen müssen, federelastisch auszubilden und dabei auch gegen die Umlaufrichtung gemäß Pfeil D zumindest leicht zu kröpfen, zu biegen oder abzuwinkeln, wie Fig. 1 zeigt. Durch diese federelastischen Zinken 55 wird eine optimale Außenreinigung des Krumenpackers 11 erreicht.

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Gemäß Fig. 3 ist die Walze 118, die die Zinken 120 trägt, mit dem walzenförmigen Körper 112 über ein Getriebe 160 gekuppelt, über das die Umlaufbewegung des walzenförmigen Körpers 112 in eine dazu gleichsinnige Antriebsdrehbewegung der Walze 118 umgeformt wird. Das Getriebe 160 besteht hier z.B. aus einem Riemengetriebe mit an der Abschlußscheibe 114 des walzenförmigen Körpers 112 befestigter Riemenscheibe 161 und einem Antriebsriemen 162, der über die Riemenscheibe 161 und ferner über die Walze 118 geführt ist und beide getrieblich koppelt.

Es versteht sich, daß das Getriebe 160 auch anders ausgebildet sein kann, z.B. als Kettengetriebe, Reibradgetriebe, Zahnradgetriebe oder dergl., wobei auch die Anordnung des Getriebes an anderer Stelle sitzen kann, soweit nur sichergestellt ist, daß die Umlaufbewegung des Körpers 112 zum Antrieb der Walze 118 herangezogen wird, die dabei mit größerer Drehzahl umläuft.

Bei dem in Fig. 4 gezeigten dritten Ausführungsbeispiel sind aus den genannten Gründen für gleiche Teile um 200 größere Bezugszeichen verwendet. Bei diesem Ausführungsbeispiel ist die Walze 218 in bezug auf die Längsmittelachse 216 des walzenförmigen Körpers 212 bedarfsweise auch noch radial verstellbar. Hierzu ist der radiale Tragteil 231 dadurch verstellbar ausgebildet, daß er aus zwei relativ zueinander verschiebbaren Einzeltragteilen 270, 271 gebildet ist, die in der jeweiligen Relativstellung festlegbar sind. Hierzu enthält z.B. der Einzeltragteil 271 ein Langloch 272, in das zumindest eine am anderen Einzeltragteil 270 sitzende Schraube 273 eingreift.

## Patentansprüche

1. Vorrichtung zur landwirtschaftlichen Bodenbearbeitung, mit einem Krumenpacker (11), der einen etwa walzenförmigen Körper (12), dessen Mantelfläche durch etwa achsparallele, in Umfangsrichtung in Abständen aufeinanderfolgende Längsstäbe (13) gebildet ist, und ferner zumindest eine mit dem walzenförmigen Körper (12) zusammenarbeitende Erdbehandlungseinrichtung (17) aufweist, die mindestens einem Längsstab (13) benachbart ist, und die eine im Inneren, in dem - in Arbeitsrichtung (A) betrachtet - vorderen und dabei unteren Quadranten des walzenförmigen Körpers (12, 112, 212) angeordnete, vom walzenförmigen Körper (12, 112, 212) angetriebene Walze (18, 118, 218) aufweist, die um eine zur Längsmittelachse (16, 116, 216) des walzenförmigen Körpers (12, 112, 212) zumindest im wesentlichen parallele Achse (19, 119, 219) drehbar gelagert ist und in Längsrichtung in vorzugsweise etwa gleich grossen Abständen aufeinanderfolgende, vorstehende Zinken, (20, 120, 220) aufweist, die beim Umlauf der Walze (18, 118, 218) jeweils durch die Zwischenraumbereiche (21) zwischen zwei aufeinanderfolgenden Längsstäben (13) des walzenförmigen Körpers (12, 112, 212) hindurchgreifen dadurch gekennzeichnet, daß die Zinken (20, 120, 220) der Walze (18, 118, 218) gegen die Umlaufrichtung (c) dieser Walze (18, 118, 218) gekröpft, gebogen oder abgeknickt sind.

2. Vorrichtung nach Anspruch 1, dadurch gekennzeichnet, dass die Zinken (20, 120, 220) je einen von der Walze (18, 118, 218) ausgehenden Abschnitt (22) und einen etwa auf dem Radialbereich des von den Längsstäben (13) umschriebenen Umfangskreises an den Abschnitt (22) anschliessenden, demgegenüber entgegen der Umlaufrichtung (C) der Walze (18, 118, 218), unter einem stumpfen Winkel abgekröpften, abgebogenen oder abgeknickten Endabschnitt (23) aufweisen.

3. Vorrichtung nach Anspruch 1 oder 2, dadurch gekennzeichnet, dass zumindest einige der Zinken (20, 120, 220) der Walze (18, 118, 218) als Getriebezähne ausgebildet sind, derart, dass der Umlaufdrehbewegung (B) des walzenförmigen Körpers (12, 112, 212) die Walze (18, 118, 218) nach Art einer Triebstockverzahnung von den Längsstäben (13) des Körpers (12, 112, 212) zwangsangetrieben ist.

4. Vorrichtung nach Anspruch 1 oder 2, dadurch gekennzeichnet, dass die Walze (118) mit dem walzenförmigen Körper (112) mittels eines Getriebes (160), insbesondere eines Ketten- oder Riemengetriebes, gekuppelt ist und über dessen Umlaufdrehbewegung mittels des Getriebes (160) angetrieben ist.

5. Vorrichtung nach mindestens einem der Ansprüche 1 bis 4, dadurch gekennzeichnet, dass die Walze (18, 118, 218) etwa im Bereich der Winkelhalbierenden des vorderen, unteren Quadranten angeordnet ist.

6. Vorrichtung nach mindestens einem der Ansprüche 1 bis 5, dadurch gekennzeichnet, dass die-in Längsrichtung der Walze (18, 118, 218) gesehen-jeweils einzelnen Zinken (20, 120, 220) in Längsrichtung in Abständen aufeinanderfolgen und diese Zinken (20, 120, 220) in Umfangsrichtung gegeneinander versetzt sind.

7. Vorrichtung nach mindestens einem der Ansprüche 1 bis 5, dadurch gekennzeichnet, dass je Radialbereich an der Walze mehrere Zinken angeordnet sind, die in einer gemeinsamen Radialebene verlaufen und in Umfangsrichtung vorzugsweise in gleich grossen Winkelabständen voneinander angeordnet sind.

8. Vorrichtung nach mindestens einem der Ansprüche 1 bis 7, dadurch gekennzeichnet, dass der walzenförmige Körper (12, 112, 212) auf beidendigen Achsstummeln (26) frei drehbar gelagert ist und dass die Achsstummel (26) in Axialabstand davon jeweils an Haltearmen (25) starr oder federnd gehalten sind.

9. Vorrichtung nach mindestens eimem der Ansprüche 1 bis 7, dadurch gekennzeichnet dass der walzenförmige Körper (12, 112, 212) auf beidendigen Achsstummmeln (26) frei drehbar gelagert ist und dass die Achsstummel (26) jeweils an Haltearmen (25) mittels Gleitlagern oder Wälzlagern (27) drehbar gehalten sind.

10. Vorrichtung nach Anspruch 8 oder 9, dadurch gekennzeichnet, dass die Achsstummel (26) mit einem Endabschnitt (29) axial in das Innere des walzenförmigen Körpers (12) hineinragen und an diesem Endabschnitt (29) vorzugsweise drehfest eine Tragvorrichtung (30) gehalten ist, an der die Walze (18) frei drehbar gelagert ist.

11. Vorrichtung nach Anspruch 10, dadurch gekennzeichnet, dass der Tragvorrichtung (30) beidendig der Walze (18) zu deren Lagerung je einen Lagerzapfen (32) und ein jenen aufnehmendes Wälzlager oder Gleitlager (33) zugeordnet ist, wobei der Lagerzapfen (32) entweder drehfest an der Tragvorrichtung (30) gehalten ist oder Teil der Walze (18) und mit dieser zusammen an der Tragvorrichtung (30) gelagert ist.

12. Vorrichtung nach Anspruch 10 oder 11, dadurch gekennzeichnet, dass die Tragvorrichtung (30) der stirnseitigen Abschlussscheibe (14, 15) des walzenförmigen Körpers (12) eng benachbart ist unter Belassung eines nur schmalen Zwischenraumes.

13. Vorrichtung nach mindestens einem der Ansprüche 10 bis 12, dadurch gekennzeichnet, dass die Lagerstellen der Walze (18) jeweils mittels eines äusseren Schutzes (34) nach aussen abgedeckt und geschützt sind.

14. Vorrichtung nach einem der Ansprüche 10 bis 13, dadurch gekennzeichnet, dass die Tragvorrichtung (30) jeweils aus einem radial verlaufenden Tragteil (31) besteht, welcher vorzugsweise abgefedert oder selbst als Federteil, z.B. als Blattfeder, ausgebildet ist.

15. Vorrichtung nach Anspruch 14, dadurch gekennzeichnet, dass der radiale Tragteil (231) in Radialrichtung verstellbar ausgebildet ist, insbesondere aus zwei relativ zueinander verschiebbaren und festlegbaren Einzeltragteilen (270, 271) gebildet ist.

16. Vorrichutng nach einem der Ansprüche 1 bis 15 dadurch gekennzeichnet, dass einige der Zinken (20, 120, 220) aus elastisch federndem und nachgiebigem Material gebildet sind.

17. Vorrichtung nach einem der Ansprüche 1 bis 15, dadurch gekennzeichnet, dass einige der Zinken (20, 120, 220) an der Walze (18, 118, 218) federnd gehalten sind.

18. Vorrichtung nach einem der Ansprüche 1 bis 17, dadurch gekennzeichnet, dass die Walze (18) mit Zinken (20) um die Längsmittelachse (16) der Achsstummel (26) relativ zu den Haltearmen (25) schwenkbar ist, und vorzugsweise mittels einer Verstelleinrichtung (44) verstellbar ist.

19. Vorrichtung nach Anspruch 18, dadurch gekennzeichnet, dass die Verstelleinrichtung eine an einem Haltearm (25) befestigte Lochschiene aufweist, mit der eine mit der Walze (18) drehfest verbundene, dem Haltearm (25) zugeordnete Haltestrebe verstellbar verbunden ist.

20. Vorrichtung nach Anspruch 18, dadurch gekennzeichnet dass die Verstelleinrichtung (44) eine Verstellspindel (45, 46) aufweist, die zwischen einem Haltearm (25) und einer mit der Walze (18) drehfest verbundenen, dem Haltearm (25) zugeordneten Haltestrebe (43) wirksam ist.

21. Vorrichtung nach mindestens einem der Ansprüche 18 bis 20, dadurch gekennzeichnet, dass die Walze (18) gegensinnig zur Umlaufrichtung (B) des walzenförmigen Körpers (12) um dessen Längsmittelachse (16), vorzugsweise gegen die Kraft einer Überlastsicherungsfeder (51) schwenkbar ist.

22. Vorrichtung nach Anspruch 21, dadurch gekennzeichnet, dass die Feder (51) an der Verstellspindel (45, 46) angreift.

23. Vorrichtung nach Anspruch 22, dadurch gekennzeichnet, dass die Verstellspindel in ein Verstellrohr (48) eintaucht, das ein achsparalleles Langloch (49) aufweist, in das ein radialer Stift (50) an der Spindelhülse (46) der Verstellspindel eingreift, und dass zwischen der Spindelhülse (46) und dem Verstellrohr (48) eine Druckfeder (51), insbesondere zylindrische Schaubenfeder, wirksam ist, die mit einem Ende an der Spindelhülse (46) und mit ihrem anderen Ende an dem Verstellrohr (48) abgestützt ist.

24. Vorrichtung nach mindestens einem der Ansprüche 1 bis 23, gekennzeichnet durch zumindest eine in Arbeitsrichtung (A) hinter dem walzenförmigen Körper (12) und ausserhalb dieses drehbar gehaltene Walze (54).

25. Vorrichtung nach Anspruch 24, dadurch gekennzeichnet, dass die Walze (54) von dem walzenförmigen Körper (12) zwangsangetrieben ist und vorzugsweise gegensinnig (Pfeil D) zu diesem umläuft.

26. Vorrichtung nach Anspruch 24 oder 25, dadurch gekennzeichnet dass die Walze (54) etwa radial vorstehende Zinken (55) aufweist.

27. Vorrichtung nach Anspruch 26, dadurch gekennzeichnet, dass alle oder zumindest einige der entlang der Walze (54) angeordneten Zinken (55) derart bemessen sind, dass sie von aussen her in die Zwischenraumbereiche (56) zwischen zwei aufeinanderfolgenden Längsstäben (13) des walzenförmigen Körpers (12) zumindest eingreifen , vorzugsweise durch diese sogar hindurchgreifen.

28. Vorrichtung nach Anspruch 27, dadurch gekennzeichnet, dass zumindest einige der Zinken (55) der Walze (54) als Getriebezähne ausgebildet sind und etwa radial in den von den Längsstäben (13) umschriebenen Umfangskreis des walzenförmigen Körpers (12) von aussen hineinreichen derart, dass bei der Umlaufdrehbewegung (B) des walzenförmigen Körpers (12) die Walze (54) nach Art einer Triebstockverzahnung von den Längsstäben (13) des walzenförmigen Körpers (12) angetrieben ist.

29. Vorrichtung nach Anspruch 28, dadurch gekennzeichnet, dass die als Getriebezähne ausgebildeten Zinken (55) starr und die übrigen Zinken (55) federnd ausgebildet und/oder gehalten sind.

## Claims

1. A device for agricultural soil cultivation, comprising a top soil compressor (11), which consists of an approximately roller-shaped body (12), the outer surface of which is formed by approximately axially parallel longitudinal rods (13) arranged successively at intervals, and of at least one earth processing device (17) which cooperates with the roller-shaped body (12), is adjacent to at least one longitudinal rod (13) and possesses a roller (18, 118, 218) which is arranged internally, considered in the operating direction (A) in the front, bottom quadrant of the roller-shaped body (12, 112, 212), is driven by the roller-shaped body (12, 112, 212), is mounted so as to be rotatable about an axis (19, 119, 219) extending at least substantially in parallel to the central longitudinal axis (16, 116, 216) of the roller-shaped body (12, 112, 212) and is provided with projecting prongs (20, 120, 220), which are arranged successively in the longitudinal direction at preferably approximately equal intervals and which, during the rotation of the roller (18, 118, 218), each engage through the interspace zones (21) between two successive longitudinal rods (13) of the roller-shaped body (12, 112, 212), characterised in that the prongs (20, 120, 220) of the roller (18, 118, 218) are angled, curved or bent in a direction opposed to the direction of rotation (C) of this roller (18, 118, 218).

2. A device as claimed in Claim 1, characterised in that the prongs (20, 120, 220) each comprise a portion (22), which commences from the roller (18, 118, 218), and an end portion (23) which adjoins the portion (22) approximately in the radial zone of the circumferential circle described by the longitudinal rods (13) and which is angled, curved or bent at an obtuse angle with respect to said portion (22) in a direction opposed to the direction of rotation (C) of the roller (18, 118, 218).

3. A device as claimed in Claims 1 or 2, characterised in that at least some of the prongs (20, 120, 220) of the roller (18, 118, 218) have the form of gear teeth, in such manner that during the rotational movement (B) of the roller-shaped body (12, 112, 212), the roller (18, 118, 218) is automatically driven in the manner of meshed gears by the longitudinal rods (13) of the body (12, 112, 212).

4. A device as claimed in Claims 1 or 2, characterised in that the roller (118) is coupled to the roller-shaped body (112) by means of a transmission (160), in particular a chain drive or belt drive, and is driven via the rotational movement of said roller-shaped body (112) by means of the transmission (160).

5. A device as claimed in at least one of Claims 1 to 4, characterised in that the roller (18, 118, 218) is arranged approximately in the region of the angle bisector of the front, bottom quadrant.

6. A device as claimed in at least one of Claims 1 to 5, characterised in that the respective individual pongs (20, 120, 220), considered in the longitudinal direction of the roller (18, 118, 218), are arranged successively at intervals in the longitudinal direction and these prongs (20, 120, 220) are offset with respect to one another in the peripheral direction.

7. A device as claimed in at least one of Claims 1 to 5, characterised in that in each radial zone a plurality of prongs are arranged on the roller, where said prongs extend in a common radial plane and are arranged preferably at equal angular intervals from one another in the peripheral direction.

8. A device as claimed in at least one of Claims 1 to 7, characterised in that the roller-shaped body (12, 112, 212) is mounted so as to rotate freely on axle journals (26) disposed at both ends, and that the axle journals (26) are rigidly or flexibly mounted on respective support arms (25) at an axial distance therefrom.

9. A device as claimed in at least one of Claims 1 to 7, characterised in that the roller-shaped body (12, 112, 212) is mounted so as to be freely rotatable on axle journals (26) disposed at both ends, and that the axle journals (26) are rotatably mounted on respective support arms (25) by means of sliding bearings or roller bearings (27).

10. A device as claimed in Claims 8 or 9, characterised in that with an end portion (29) the axle journals (26) project axially into the interior of the roller-shaped body (12) and a carrier device (30) is mounted on this end portion (29), preferably so as to be resistant to rotation, the roller (18) being mounted on said carrier device (30) so as to be freely rotatable.

11. A device as claimed in Claim 10, characterised in that at both ends of the roller (18), for the support thereof, the carrier device (30) is assigned a respective journal pin (32) and a roller bearing or sliding bearing (33) which accomodates said journal pin (32), where the journal pin (32) is either mounted on the carrier device (30) so as to be resistant to rotation or forms a part of the roller (18) and is mounted together with the latter on the carrier device (30).

12. A device as claimed in Claims 10 or 11, characterised in that the carrier device (30) is closely adjacent to the end plate (14, 15) of the roller-shaped body (12), leaving only a narrow interspace.

13. A device as claimed in at least one of Claims 10 to 12, characterised in that the bearings of the roller (18) are in each case covered and protected from the exterior by means of an outer protection means (34).

14. A device as claimed in one of Claims 10 to 13, characterised in that the carrier device (30) in each case comprises a radially extending carrier member (31) which is preferably spring mounted or itself has the form of a spring component, e.g. a leaf spring.

15. A device as claimed in Claim 14, characterised in that the radial carrier member (231) is designed to be adjustable in the radial direction, and in particular is formed by two individual carrier members (270, 271) which can be displaced and fixed relative to one another.

16. A device as claimed in one of Claims 1 to 15, characterised in that some of the prongs (20, 120, 220) are formed from elastic and resilient material.

17. A device as claimed in one of Claims 1 to 15, characterised in that some of the prongs (20, 120, 220) are spring mounted on the roller (18, 118, 218).

18. A device as claimed in one of Claims 1 to 17, characterised in that the roller (18) with the prongs (20) is rotatable about the central longitudinal axis (16) of the axle journals (26) relative to the support arms (25) and preferably is adjustable by means of an adjusting device (44).

19. A device as claimed in Claim 18, characterised in that the adjusting device comprises a perforated bar which is attached to a support arm (25) and to which a tie rod, which is connected to the roller (18) so as to be resistant to rotation and is assigned to the support arm (25), is adjustably connected.

20. A device as claimed in Claim 18, characterised in that the adjusting device (44) comprises an adjusting spindle (45, 46) which operates between a support arm (25) and a tie rod (43) which is connected to the roller (18) so as to be resistant to rotation and is assigned to the support arm (25).

21. A device as claimed in at least one of Claims 18 to 20, characterised in that the roller (18) is pivotable in the direction opposed to the direction of rotation (B) of the roller-shaped body (12) about the central longitudinal axis (16) of said roller-shaped body (12), preferably against the force of an overload protection spring (51).

22. A device as claimed in Claim 21, characterised in that the spring (51) acts on the adjusting spindle (45, 46).

23. A device as claimed in Claim 22, characterised in that the adjusting spindle engages into an adjusting tube (48) which contains an axially parallel slot (49) into which a radial pin (50) on the spindle sleeve (46) of the adjusting spindle engages, and that a compression spring (51), in particular a cylindrical helical spring, operates between the spindle sleeve (46) and the adjusting tube (48), where one end of said compression spring (51) bears against the spindle sleeve (46) and the other end bears against the adjusting tube (48).

24. A device as claimed in at least one of Claims 1 to 23, characterised by at least one roller (54) which, considered in the operating direction (A), is rotatably mounted behind the roller-shaped body (12) and outside of the latter.

25. A device as claimed in Claim 24, characterised in that the roller (54) is automatically driven by the roller-shaped body (12) and preferably rotates in the opposite direction (arrow D) to the latter.

26. A device as claimed in Claims 24 or 25, characterised in that the roller (54) comprises approximately radially projecting prongs (55).

27. A device as claimed in Claim 26, characterised in that all of or at least some of the prongs (55) arranged along the roller (54) are dimensioned such that they engage from the exterior at least into, and preferably even through, the interspace zones (56) between two successive longitudinal rods (13) of the roller-shaped body (12).

28. A device as claimed in Claim 27, characterised in that at least some of the prongs (55) of the roller (54) have the form of gear teeth and extend from the exterior approximately radially into the circumferential circle described by the longitudinal rods (13) of the roller-shaped body (12), in such manner that during the rotational movement (B) of the roller-shaped body (12), the roller (54) is driven in the manner of meshed gears by the longitudinal rods (13) of the roller-shaped body (12).

29. A device as claimed in Claim 28, characterised in that the prongs (55), which have the form of gear teeth, are of rigid construction an/or rigidly mounted, whereas the other prongs (55) are of spring construction and/or spring mounted.

## Revendications

1. Dispositif agricole de travail du sol comportant un rouleau émotteur (11) qui comprend un corps (12) sensiblement cylindrique, dont l'enveloppe est formée par des tiges longitudinales (13) sensiblement parallèles à la direction axiale et espacées les unes des autres le long de la circonférence de ladite enveloppe, et en sus au moins un dispositif (17) de traitement de la terre, coopérant avec le corps cylindrique (12), qui s'étend dans le voisinage d'au moins une tige longitudinale (13) et qui comprend un rouleau (18, 118, 218) s'étendant à l'intérieur du corps cylindrique (12, 112, 212), dans le quadrant inférieur avant de celui-ci - vu dans la direction de travail (A) - et entraîné par le corps cylindrique (12, 112, 212), lequel rouleau (18, 118, 218) est guidé en rotation autour d'un axe (19, 119, 219) au moins sensiblement parallèle à l'axe longitudinal (16, 116, 216) du corps cylindrique (12, 112, 212) et comporte des dents saillantes (20, 120, 220) implantées longitudinalement, de préférence à intervalles sensiblement réguliers les unes après les autres, lesquelles dents (20, 120, 220) s'étendent chacune, lors de la rotation du rouleau (18, 118, 218), à travers les espaces (21) entre deux tiges longitudinales (13) consécutives du corps cylindrique (12, 112, 212), caractérisé par le fait que les dents (20, 120, 220) du rouleau (18, 118, 218) sont coudées, courbées ou pliées à l'encontre de la direction de rotation (C) dudit rouleau (18, 118, 218).

2. Dispositif selon la revendication 1, caractérisé par le fait que les dents (20, 120, 220) présentent chacune un tronçon (22) partant du rouleau (18, 118, 218) et un tronçon d'extrémité (23) se raccordant au tronçon (22) sensiblement dans la zone radiale du cercle périphérique décrit par les tiges longitudinales (13) et étant en sus coudé, courbé ou plié suivant un angle obtus à l'encontre de la direction de rotation (C) du rouleau (18, 118, 218).

3. Dispositif selon la revendication 1 ou 2, caractérisé par le fait qu'au moins quelques unes des dents (20, 120, 220) du rouleau (18, 118, 218) sont réalisées sous forme de dents d'engrenage, de telle sorte que, lors de la rotation (B) du corps cylindrique (12, 112, 212), le rouleau (18, 118, 218) est entraîné positivement par les tiges longitudinales (13) du corps (12, 112, 212) à la manière d'un engrenage à fuseaux.

4. Dispositif selon la revendication 1 ou 2, caractérisé par le fait que le rouleau (118) est couplé avec le corps cylindrique (112) au moyen d'un entraînement (160), en particulier un entraînement par chaîne ou courroie, et est entraîné au moyen de l'entraînement (160) par la rotation dudit corps (112).

5. Dispositif selon l'une au moins des revendications 1 à 4, caractérisé par le fait que le rouleau (18, 118, 218) s'étend sensiblement dans la zone de la bissectrice du quadrant inférieur avant.

6. Dispositif selon l'une au moins des revendications 1 à 5, caractérisé par le fait que - vu suivant la direction longitudinale du rouleau (18, 118, 218) - les différentes dents (20, 120, 220) se suivent chacune à intervalles suivant la direction longitudinale et que ces dents (20, 120, 220) sont décalées l'une par rapport à l'autre suivant la direction de rotation.

7. Dispositif selon l'une au moins des revendications 1 à 5, caractérisé par le fait que par zone radiale du rouleau, il est prévu plusieurs dents qui s'étendent dans un même plan radial et sont, en considérant la direction de rotation, séparées les unes des autres suivant des secteurs angulaires de préférence égaux.

8. Dispositif selon l'une au moins des revendications 1 à 7, caractérisé par le fait que le corps cylindrique (12, 112, 212) est guidé à ses deux extrémités sur des tourillons (26), de façon à pouvoir tourner librement, et qu'à distance axiale de là, les tourillons (26) sont supportés chacun de manière rigide ou élastique à des bras de support (25).

9. Dispositif selon l'une au moins des revendications 1 à 7, caractérisé par le fait que le corps cylindrique (12, 112, 212) est guidé à ses deux extrémités sur des tourillons (26), de façon à pouvoir tourner librement, et que les tourillons (26) sont supportés chacun par des bras de support (25), de manière à pouvoir tourner, au moyen de paliers lisses ou de paliers à roulement (27).

10. Dispositif selon la revendication 8 ou 9, caractérisé par le fait que les tourillons (26) entrent par une extrémité (29) axialement à l'intérieur du corps cylindrique (12) et qu'à cette extrémité (29) est supporté un dispositif porteur (30), de préférence de manière à ne pas pouvoir tourner, dans lequel le rouleau (18) est guidé de façon à pouvoir tourner librement.

11. Dispositif selon la revendication 10, caractérisé par le fait qu'aux deux extrémités du rouleau (18) il est prévu, en vue de son guidage, un pivot (32) et un palier à roulement ou un palier lisse (33) respectifs, associés au dispositif porteur (30), ledit pivot (32) étant supporté par le dispositif porteur (30), de manière à ne pas pouvoir tourner ou faisant partie du rouleau (18) en étant, conjointement avec celui-ci, guidé dans le dispositif porteur (30).

12. Dispositif selon la revendication 10 ou 11, caractérisé par le fait que le dispositif porteur (30) s'étend très près du flasque de fermeture frontal (14, 15) du corps cylindrique (12), de manière à ne laisser subsister qu'un intervalle étroit.

13. Dispositif selon l'une au moins des revendications 10 à 12, caractérisé par le fait que les points de guidage du rouleau (18) sont recouverts et protégés chacun au moyen d'un protecteur extérieur (34).

14. Dispositif selon l'une au moins des revendications 10 à 13, caractérisé par le fait que le dispositif porteur (30) est composé d'une pièce porteuse (31) respective s'étendant radialement, laquelle est de préférence montée élastiquement ou est réalisée elle-même en tant que pièce élastique, par exemple en tant que ressort à lame.

15. Dispositif selon la revendication 14, caractérisé par le fait que la pièce porteuse radiale (231) est réalisée de manière à être radialement réglable, en particulier par deux pièces porteuses unitaires (270, 271) qui peuvent être translatées et fixées l'une par rapport à l'autre.

16. Dispositif selon l'une des revendications 1 à 15, caractérisé par le fait que quelques unes des dents (20, 120, 220) sont réalisées dans un matériau élastique et souple.

17. Dispositif selon l'une des revendications 1 à 15, caractérisé par le fait que quelques unes des dents (20, 120, 220) sont liées de manière élastique au rouleau (18, 118, 218).

18. Dispositif selon l'une des revendications 1 à 17, caractérisé par le fait que le rouleau (18) avec les dents (20) peut être pivoté autour de l'axe longitudinal (16) des tourillons (26) par rapport aux bras de support (25) et est, de préférence, réglable au moyen d'un dispositif de réglage (44).

19. Dispositif selon la revendication 18, caractérisé par le fait que le dispositif de réglage comporte une barre à trous fixée à un bras de support (25), à laquelle est liée, de manière réglable, une jambe de force associée audit bras de support (25), liée au rouleau (18) de façon à ne pas pouvoir tourner.

20. Dispositif selon la revendication 18, caractérisé par le fait que le dispositif de réglage (44) comporte une tige de réglage (45, 46) qui agit entre un bras de support (25) et une jambe de force (43) associée audit bras de support (25) et liée au rouleau (18) de façon à ne pas pouvoir tourner.

21. Dispositif selon l'une au moins des revendications 18 à 20, caractérisé par le fait que le rouleau (18) peut pivoter à l'encontre de la direction de rotation (B) du corps cylindrique (12) autour de l'axe longitudinal (16) de ce dernier, de préférence à l'encontre de la force d'un ressort (51) de sécurité contre les surcharges.

22. Dispositif selon la revendication 21, caractérisé par le fait que le ressort (51) agit sur la tige de réglage (45, 46).

23. Dispositif selon la revendication 22, caractérisé par le fait que la tige de réglage pénètre dans un tube de réglage (48) qui comporte un trou oblong (49) parallèle à l'axe, dans lequel pénètre une broche (50) radiale du fourreau (46) de la tige de réglage, et qu'entre le fourreau (46) et le tube de réglage (48) agit un ressort de compression (51), en particulier un ressort à boudin cylindrique, qui s'appuie par une extrémité sur le fourreau (46) et par son autre extrémité sur le tube de réglage (48).

24. Dispositif selon l'une au moins des revendications 1 à 23, caractérisé par au moins un rouleau (54) s'étendant, compte tenu de la direction de travail (A), derrière le corps cylindrique (12) et en-dehors de celui-ci, et supporté de manière à pouvoir tourner.

25. Dispositif selon la revendication 24, caractérisé par le fait que le rouleau (54) est entraîné positivement par le corps cylindrique (12) et tourne, de préférence dans la direction opposée (flèche D) de celui-ci.

26. Dispositif selon la revendication 24 ou 25, caractérisé par le fait que le rouleau (54) comporte des dents (55) saillant sensiblement radialement.

27. Dispositif selon la revendication 26, caractérisé par le fait que toutes ou au moins quelques unes des dents (55) implantées le long du rouleau (54), sont dimensionnées de telle manière qu'à partir de l'extérieur, elles pénètrent au moins dans les espaces (56) entre deux tiges longitudinales (13) consécutives du corps cylindrique (12), de préférence qu'elles s'étendent même au travers de ceux-ci.

28. Dispositif selon la revendication 27, caractérisé par le fait qu'au moins quelques unes des dents (55) du rouleau (54) sont réalisées sous forme de dents d'engrenage et pénètrent, de l'extérieur, sensiblement radialement dans le cercle périphérique décrit par les tiges longitudinales (13) du corps cylindrique (12), de telle manière que, durant le mouvement de rotation (B) du corps cylindrique (12), le rouleau (54) est entraîné, comme dans un engrenage à fuseaux, par les tiges longitudinales (13) du corps cylindrique (12).

29. Dispositif selon la revendication 28, caractérisé par le fait que les dents (55) réalisées sous forme de dents d'engrenage sont maintenues de façon rigide et les dents (55) restantes sont réalisées et/ou maintenues de manière élastique.
